# EUROPEAN PATENT APPLICATION

(11) **EP 4 345 721 A1**
(43) Date of publication of application: **03.04.2024**
(21) Application number: 23200111.5
(22) Date of filing: 27.09.2023
(51) Int. Cl.: G06Q 10/30, G06N 20/00, G06V 20/60

(54) **METHOD AND SYSTEM FOR DETECTING WASTE**

(30) Priority: 30.09.2022 IT 202200020100
(71) Applicant: Hyperion S.r.l., 52100 Arezzo (IT)
(72) Inventor: BARTOLINI, Sandro, 52100 Arezzo (IT); ZOPPETTI, Claudia, 52100 Arezzo (IT); ROSADINI, Simone, 52100 Arezzo (IT); MECOCCI, Alessandro, 52100 Arezzo (IT); RACIOPPI, Vittorio, 52100 Arezzo (IT); BAGHINI, Andrea, 52100 Arezzo (IT); FRANCI, Lorenzo Maria, 52100 Arezzo (IT); PARRINO, Stefano, 52100 Arezzo (IT); POZZEBON, Alessandro, 52100 Arezzo (IT)
(74) Representative: Grassi, Stefano

(57) **Abstract**

A method for identifying waste is executed by monitoring a detection area by means of an optical sensor. Operationally, the presence of waste is checked several times by controlling the optical sensor according to a plurality of sets of distinct parameters and if the examination provides the same result each time (i.e. the same waste item is detected in several successive iterations) a corresponding counter is increased. When the counter exceeds a set threshold value, an alert signal representative of the presence of a waste item to be removed in the detection area is generated.

## Description

### Technical field of the invention

The present invention relates to the technical field of the analysis processes aimed at managing waste, specifically in urban areas without thereby wanting to exclude the possible implementation thereof in a different context (for example in rural areas).

In particular, the present invention relates to a method and a system intended for detecting waste and the identification thereof.

### Prior art

The phenomenon of waste abandonment, especially in urban areas, is growing exponentially and this produces extremely negative effects for the environment and the health, in particular due to the "attracting" effect it generates.

In fact, it is known that the places where waste is abandoned become the receptacles for further abandonment, with a systematicity and definitiveness trend nature.

This transforms entire areas of the territory into real illegal open-air landfills, completely altering the appearance of the environment and progressively degrading it until it becomes irreparably polluted.

Frequently all this is the last and most obvious symptom of illegal activities that are performed upstream and that only in the final steps produce an abandonment of waste on public or private soil.

From this derives the growing interest linked to the timely detection of the presence of abandoned waste on the surface and the prompt identification of which areas of the territory are subject to this attracting effect, in order to mitigate the environmental degradation and the restoration costs deriving therefrom.

The detection promptness represents an important aspect, since the passing of time only worsens the situation (accumulation is a progressive phenomenon) and at the same time the longer the presence of abandoned waste persists, the greater is the likelihood that they will be noticed and generate that sense of degradation and territorial carelessness both in those who live in the area and in any transiting tourists. In addition, since the areas where abandonment takes place are generally frequented by passers-by and/or other bodies (such as vehicles) that can legitimately transit and/or stop there, it is clear how important it is that monitoring takes place in a manner that respects individual privacy.

Solutions based on simple video recording or photographic scene acquisition technologies (Phototraps) are known and available on the market in the sector.

Video recordings or photographic shots are usually stored on site on specific mass storage devices and are stored for limited periods of time, basically for privacy reasons.

The stored data are not always transmitted remotely, and this imposes the need to manually retrieve the data by physically going to the installations located in the various positions of the territory.

This is a time-consuming and money-consuming process and furthermore the existing systems do not possess any ability to automatically interpret what is video-recorded/photographically acquired and this makes it impossible to proactively generate alarms linked to the meaning of what is happening within the monitored scene.

Usually, the operation of these systems takes place by alternating two steps: a preliminary step for detecting the changes in the monitored scene (for example, movements or presence of hot bodies) and a second step for video-recording/photographically acquiring the scene itself.

The initial step of analysis of the changes is used to activate the recordings, but this activation takes place without any interpretation of what happens, that is, any change is enough to start the recordings themselves.

This limitation makes it impossible to assess whether or not to sound an alarm and, therefore, all the events are indiscriminately reported regardless of their actual meaning and importance.

In addition, the information that is video-recorded must be subsequently taken manually or transmitted remotely, in order to be analysed by human operators with further negative implications from the point of view of the privacy of those who were legitimately transiting/staying within the monitored zone.

A further negative disadvantage of the known systems derives from the fact that the remote transmission of the data must be carried out for the entire duration of the detected event and for all events, this entails the impossibility of carrying out this task continuously over time, since the transmitting part involves high energy consumptions that can hardly be supported except through a direct electrical connection which is not always feasible (at least not in a sufficiently simple and efficient way).

Therefore, the main disadvantages of the currently available solutions are therefore related to the absence of an interpretation of the content of the analysed scenes, the lack of respect for people's privacy and the extremely limited duration of the operation of the known detection systems (typically a few months and in "standby" conditions).

These limitations make extremely reduced the applicability and the effectiveness of the detection of the abandoned waste on the surface based on known systems that, moreover, almost always exploit extremely trivial architectures that are substantially limited to the optical sensor alone.

This makes it very difficult to implement software with high-level functionalities because of the need to program with low-level, and hence low-productivity tools (microcontroller programming environments and languages and reduced support of third-party's software libraries) and non-standard tools (each microcontroller family has its own development environment and a specific availability of third-party software libraries).

### Brief summary of the invention

In this context, the technical task underlying the present invention is to propose a method and a system for detecting waste which obviates at least some of the drawbacks in the prior art as described above.

In particular, an object of the present invention is to make available a method and a system for detecting waste capable of detecting and identifying with certainty the presence of a waste item within an area to be monitored.

The specified technical task and objects are substantially achieved by a method and a system for detecting waste, comprising the technical features as set out in one or more of the appended claims.

According to the present invention, a method for identifying waste is shown. This method is executed by monitoring a detection area with an optical sensor.

The presence of at least one waste item inside the detection area is then checked.

This check is carried out by operating the optical sensor according to a first set of parameters.

If a waste item is detected, a first model uniquely representative of the detected waste item is generated.

The presence of at least one waste item inside the detection area is then checked by operating the optical sensor in accordance with a second set of parameters.

The second set of parameters is different from the first set of parameters. In case of identification of the waste item, a second model uniquely representative of the detected waste item is generated.

The first model is compared with the second model.

In case of the first model and the second model being identical, a counter uniquely associated with the detected waste item and represented by the first and the second model is increased.

The steps just listed are repeated iteratively, preferably at regular intervals. When the counter exceeds a set threshold value, the respective waste item is identified as waste item to be removed.

An alert signal representative of the presence of the waste item to be removed in the detection area is then generated.

Advantageously, the method described herein allows the presence of a waste item inside the detection area to be identified with certainty, providing the possibility of safely alerting a user/operator of the need to remove a given waste item.

The dependent claims, incorporated herein by reference, correspond to different embodiments of the invention.

### Brief description of the drawings

Further features and advantages of the present invention will become more apparent from the indicative and thus non-limiting description of a preferred but non-exclusive embodiment of a method and system for detecting waste, as illustrated in the attached drawings, in which:

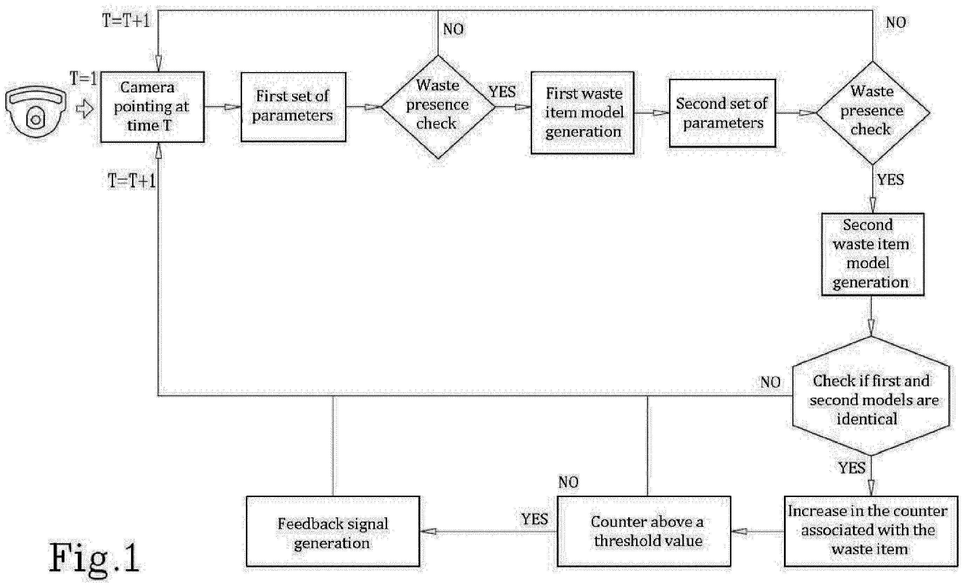

- figure 1 shows a block diagram summarising the main aspects related to the claimed method;

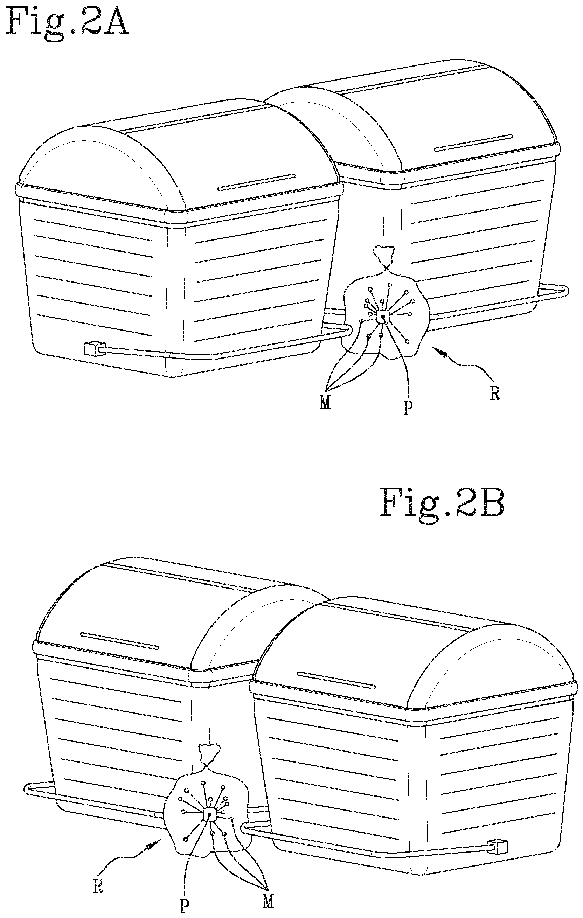

- figures 2A, 2B illustrate a possible way of performing a step of recognising a waste item within an area to be monitored carried out by applying the method according to the present invention.

### Detailed description of the invention

The method subject-matter of the present invention allows to identify in a certain and accurate way the presence of waste R within an area to be monitored, which can be for example an area of an urban environment such as among others a street, a square, a park or a rural environment.

Therefore, the execution of the method described herein makes possible a continuous monitoring aimed at detecting waste R that can decrease the aesthetic pleasantness of an area and be representative of an increasing risk of degradation of that area as well as for detecting incorrect disposal practices.

In this way it is possible to implement in a timely and efficient manner all the countermeasures useful to counteract incorrect actions of abandonment of waste R in places that are not dedicated to their collection and/or their incorrect storage in the appropriate areas.

Advantageously, the method can be executed autonomously and automatically by a computer, i.e. a processor or a control unit capable of managing and processing digital data.

The method is operationally performed by continuously monitoring a detection area.

This monitoring can be performed in particular by using an appropriate optical sensor.

This optical sensor can be of the passive type, such as by way of example a camera, or an active type sensor, such as for example a LIDAR or a time-of-flight sensor (TOF).

As will be discussed below, with specific reference to the system intended to perform the method presented herein, the camera may in particular be a dynamic zoom camera and/or a movable camera so that it can focus its field of vision on one or more distinct portions of the detection area.

In general terms, the optical sensor is any device capable of acquiring images and which can operate in accordance with a distinct plurality of sets of parameters (specifically acquisition parameters) that determine different ways of acquiring information with respect to the detection area.

Preferably, such sets of parameters comprise one or more parameters selected from: position and/or direction of the field of vision of the optical sensor, resolution, degrees of magnification, focus point.

In general, each set of parameters may comprise any parameter that defines and determines the modes of information acquisition by the optical sensor.

In other words, it is possible to command the optical sensor by modifying the characteristics thereof so as to allow acquiring information relative to the detection area and to what is happening inside it according to a plurality of different modes, in which each mode is substantially defined by a specific set of parameters.

In particular, the optical sensor can operate in accordance with a first set of parameters and with a second set of parameters different from each other. By operating the optical sensor using the first set of parameters, the presence of at least one waste item R inside the detection area is checked.

In other words, the optical sensor is operated according to a very precise first combination of specifications (magnification level, resolution...) and it is checked regularly, preferably continuously, if waste R is present in the detection area, i.e. objects identifiable as waste R.

In case the check is positive, or if the optical sensor detects the presence of one or more waste items R within the area to be monitored, a first uniquely representative model of this waste item R is generated (or a plurality of distinct and independent models if more than one waste item R is present). In other words, whenever the presence of a waste item R is detected in the detection area, a representative and identifying model of this waste item R is also generated, which uniquely depicts it in such a way as to allow the certain recognizability thereof with respect to any further waste R present in the same area.

Alternatively, that is in case this check is negative (i.e. the presence of any waste item R inside the detection area is not identified), the detection area can be monitored continuously with the first set of parameters (or even with a different set) simply until the presence of a waste item is actually detected. When a waste item R has been detected with the first set of parameters and the first model has consequently been generated, the presence of waste R inside the detection area can be checked again by operating, though, the optical sensor in accordance with a different set of parameters, specifically in accordance with the second set of parameters.

Similarly to what is described above, in the event of a positive check, a respective second model is generated for each waste item R that uniquely represents it.

Therefore, the monitoring activity performed by means of the optical sensor can lead, in response to the presence of waste R inside the detection area, to the generation of models representative of such waste R and in particular to the generation of a first and a second model for each waste item R.

If, on the other hand, a check is negative, that is, by using the second set of parameters, the presence of any waste item R is not identified, it can be assumed that the detection run carried out with the first set of parameters was subject to an error and therefore the object detected was not really a waste item R and therefore no action is necessary in this regard.

The generation of the models can be advantageously performed by applying a wide range of recognition algorithms, among which the algorithms based on deterministic techniques or the models based on neural networks stand out as to efficiency.

In particular, the first and the second model can be generated by applying a deep learning algorithm.

Alternatively, the first and the second model can be generated by associating with a plurality of distinct points of the waste item R respective markers M and a control point P.

Therefore, for each waste item R, a plurality of points are detected that are uniquely associated with either the control point P or a respective marker. It is then proceeded to calculate/measure as well as store the position of each marker with respect to the control point P.

In other words, each model is substantially identified and represented by a series of data that identifies the markers M associated with the distinct points of the waste item R as well as their position (in terms of distance and direction) with respect to the control point P, which is preferably a point positioned at a central portion of the waste item R.

The distinct points of the waste item R can be detected, identified and selected for example by applying a landmark extraction algorithm.

This type of algorithms provides to process the information (specifically the images) acquired by the optical sensor to detect points with specific characteristics, for example of shape or of colour, in absolute terms and with respect to the surrounding points that make them easily distinguishable and therefore representative for the waste item R.

In this way, even when the operating/acquisition parameters of the optical sensor are modified, these points will remain constant as the process that leads to the identification thereof remains the same.

Consequently, if the object detected is actually the same both when the optical sensor is operated with the first set of parameters and with the second set of parameters, the first and the second model will be identical or in any case corresponding in a certain and unique way.

It can be observed that the processes and the algorithms listed above can also be used synergistically, i.e. it is possible to generate the first and the second model both by applying deep learning algorithms and by applying landmark extraction algorithms, so as to ensure a better robustness and reliability of the model generation process.

The models generated (and possibly validated by comparing models obtained with different algorithms) are compared by making a comparison of the first and the second model for each waste item R and, in the case of the two being identical, a counter uniquely associated with the corresponding waste item R is incremented.

The counter of a given waste item R can advantageously be created and set to a value of 0 when any model associated with this waste item R is generated for the first time ever, in order to then be able to be progressively increased if the presence thereof continues to be detected inside the detection area even and in particular when the operating parameters of the optical sensor are changed.

In fact, the steps described above are repeated iteratively, preferably at regular intervals.

If, on the other hand, the comparison gives a negative result, that is, the first and the second model are not identical, it means that the objects identified as waste R are different and distinct from each other and therefore the respective counter is not to be increased since the first and/or the second object may not be actually waste R or may be waste R which are however present inside the detection area only for a limited period of time less than the predefined threshold value that causes the generation of the alert signal. To ensure the match of the models, each model is generated/compared by also taking into account the specific set of parameters used to acquire the information from the detection area.

If, for example, the second set of parameters differs from the first set of parameters in the degree of magnification, i.e. in the level of magnification of the optical sensor, when generating the second model and/or when comparing the first and the second model, account will be taken that dimensionally a similar and corresponding magnification ratio will exist also between the second model and the first model.

It should also be pointed out that the first and the second set of parameters can be both identical and vary in successive iterations, while maintaining the criterion of being different and distinct from each other.

Operationally, therefore, the method provides for operating the optical sensor according to different modes and if in all the modes a certain object is recognized being a waste item R and this waste item R is always the same object, then the respective counter is increased.

In this way the change of the sets of parameters for the optical sensor guarantees the robustness of the process for detecting/discriminating the waste R (i.e. if a given object is identified as a waste item R using several different acquisition modes, interpretation errors can be avoided), and the counter tracks how long a given waste item R has been present inside the detection area.

When the counter exceeds a set threshold value, the waste item R uniquely associated therewith is identified as waste item R to be removed, generating an alert signal configured to notify the presence thereof in the detection area.

In other words, the execution of the method presented so far allows to accurately recognize the elements present inside the detection area, clearly identifying the objects that are waste R and allowing to identify the need to remove them if they remain for too long in the detection area.

In fact, the recognition by means of distinct sets of parameters guarantees that the object identified is actually a waste item R and the use of the counter allows to avoid unnecessary recovery operations if this object remains in the zone to be monitored only for a limited time deemed as acceptable.

The method can further provide for a preliminary training step, in which reference parameters are associated with respective types of waste item R (bag, box, bulky...) and the steps of testing for the presence of at least one waste item R within the area to be monitored are also executed in function of the detection of said reference parameters.

Therefore, it is possible to acquire reference parameters that facilitate the recognition of specific types of objects to be recognized as waste R (for example parameters of shape, colour or position inside the detection area) and on the basis of which it is possible to make the identification of waste R even more precise as well as to acquire further information of interest by discriminating the specific relevant type of the identified waste item R.

In accordance with a possible embodiment, the alert signal comprises a text string through which a clear and precise indication is provided with respect to, in particular, the quantity and the type of waste R to be removed.

Therefore, the alert signal can indicate in this context a specific list in which the number of waste items R to be removed is indicated and, for example by exploiting the information obtained from the reference parameters, also their type, so that a user/operator can know precisely how much and which waste items R are to be removed inside the detection area.

This aspect of the invention is particularly advantageous as it provides a particularly clear and easy to interpret indication and also it contains only the specific information of interest, thus being safe for the privacy of those who might be transiting inside the detection area and have therefore been viewed by the optical sensor.

Alternatively or additionally, the alert signal comprises one or more images (for example a sequence of images defining a video shot) depicting the area to be monitored and in particular the waste R to be removed.

In this context, the text string can still accompany the images so as to facilitate the identification of the waste R to be removed.

Preferably, if the alert signal conveys images, the method may provide for the execution of a blacking out step in which the persons and/or the objects present inside the detection area that do not coincide with the waste R to be removed are blacked out.

In this way, people's privacy is guaranteed and it is easier for the user to identify information of real interest and usefulness.

In addition, the alert signal can be encrypted, so as to avoid the risk of any unauthorised access to the information content thereof.

In this way, only the persons actually authorised to receive the indications present in the feedback signal can receive this information and an additional level of security and respect for the privacy of the persons transiting in the detection area is provided.

Advantageously, the present invention achieves the proposed objects by overcoming the mentioned drawbacks in the prior art by making available to the user a method for identifying waste R that guarantees a correct and efficient detection and identification of waste R within the monitored zone, thus being particularly suitable for combating urban degradation phenomena.

The present invention also relates to a system for detecting waste R, which is particularly suitable for carrying out the method having one or more of the features described above.

Structurally, such a system comprises at least one optical sensor, a transmission device and a control unit.

The optical sensor is in particular operable according to a plurality of sets of parameters distinct from each other.

As indicated above, these parameters may comprise one or more specific information acquisition criteria such as for example position and/or direction of the field of vision of the optical sensor, resolution, degree of magnification, focus point.

Such a sensor may therefore in particular comprise a camera, preferably a dynamic zoom camera.

Alternatively or additionally, the optical sensor may also comprise an attic type sensor, such as for example the already mentioned LIDAR and TOF.

Such an optical sensor may further comprise or be coupled/associated with a movement device configured to orient the field of vision thereof in such a way as to display and/or focus different contiguous portions of the detection area.

The control unit can advantageously control the optical sensor according to the predetermined sets of parameters in order to check the presence of at least one waste item R inside the detection area, i.e. in such a way as to acquire the visual information necessary to determine (by executing the method subject-matter of the present invention) the presence of any waste R to be removed.

In other words, the control unit is configured to operate the optical sensor according to a first set of parameters and to check for the presence of waste R in the detection area.

When a waste item is detected, the corresponding first model is generated and the optical sensor is operated by applying a second (different) set of parameters.

If even in this case the presence of a waste item is detected/checked, the corresponding second model is generated.

At this point, the control unit is configured to compare the first and the second model and in case of the two being identical, a special counter uniquely associated with the waste item R in question increases.

The control unit is further configured to command the transmission device to remotely transmit the alert signal when the counter exceeds a set threshold value, and preferably said transmission device comprises an antenna configured to transmit the alert signal by a wireless communication protocol, such as for example a Wi-Fi^{®}, Bluetooth^{®} or LoraWAN^{®} protocol. The control unit then commands the operation of the optical sensor so as to acquire information from the detection area and, based on the data collected, it determines and generates the first and the second model increasing the respective counter when necessary.

When one or more counters exceed the respective set threshold values, the control unit generates the alert signal and activates the transmission device to transmit it remotely.

In other words, the control unit is or defines a computer adapted and configured to overall command the operation of the system for the purpose of executing the claimed method.

Advantageously, the system may further comprise one or more chargeable batteries configured to power, therefore to supply electric power, to the other components of the system itself, i.e. at least to the optical sensor, to the control unit and to the transmission device.

The batteries may be powered/charged by means of a charging device included in or coupled to the system and preferably comprising at least one photovoltaic panel and/or a connector element configured to connect the chargeable batteries to a power grid.

In this way, the operation of the system is guaranteed for long periods of time without the need for continuous maintenance interventions for the replacement of the power supply of the components thereof.

Advantageously, the present invention also relates to a movable system for detecting waste.

This system essentially comprises a system for detecting waste having one or more of the technical features presented above, as well as a movable support on which the system is installed.

Advantageously, said movable support can be for example a drone, in particular a self-driven drone, or a vehicle, such as for example a waste-collection vehicle.

In this way, that is by installing the system on a movable support, it is possible to monitor large areas even with a limited number of identification systems, as well as to avoid the need to install fixed systems on site that would remain exposed to the atmospheric agents as well as any vandalism actions.

## Claims

1. Method executable by a calculator to identify waste comprising the steps of:
a) monitoring a detection area with an optical sensor;
b) checking, by operating the optical sensor in accordance with a first set of parameters, the presence of at least one waste item (R) inside the detection area;
c) detecting the presence of the at least one waste item and generating a first model uniquely representative of said waste item (R);
d) checking, by operating the optical sensor in accordance with a second set of parameters, the presence of at least one waste item (R) inside the detection area;
e) detecting the presence of the at least one waste item and generating a second model uniquely representative of said waste item (R) and comparing the first model with the second model;
f) in the event of the first model and the second model being identical, increasing a counter uniquely associated with said waste item (R);
g) repeating iteratively, preferably at regular time intervals, steps b) to f);
h) when the counter exceeds a set threshold value, identifying the respective waste item (R) as waste item (R) to be removed, generating an alert signal indicating the presence of said waste item (R) to be removed in the detection area.

2. Method according to claim 1, wherein the first and the second model are generated by running the steps of:
- associating with a plurality of distinct points of the waste item (R) a respective plurality of markers (M) and a control point (P);
- calculating and storing the position of each marker with respect to the control point (P);
said distinct points being detected and selected by a landmark extraction algorithm.

3. Method according to claim 1, wherein the first and the second model are generated by applying a deep learning algorithm.

4. Method according to any one of the preceding claims, comprising a training step in which reference parameters are associated with respective types of waste item (R) and the steps of testing for the presence of at least one waste item (R) within the area to be monitored is also performed in function of the detection of said reference parameters.

5. Method according to any one of the preceding claims, wherein the first and the second set of parameters comprise at least one of: position and/or direction of the field of vision of the optical sensor, resolution, degrees of magnification, focus point.

6. Method according to any one of the preceding claims, comprising a step of encrypting the alert signal.

7. Method according to any one of the preceding claims, wherein the alert signal comprises a text string, preferably said text string representing the quantity and type of waste item (R) to be removed.

8. Method according to any one of the preceding claims, wherein the alert signal conveys one or more images showing the area to be monitored and waste item (R) to be removed.

9. Method according to claim 8, comprising a step of blacking out the objects present in one or more images not coinciding with the waste item (R) to be removed.

10. System for detecting waste comprising:
- at least one optical sensor operable according to a plurality of distinct sets of parameters;
- a transmission device;
- a control unit configured to:
- control the optical sensor according to a first set of parameters to detect the presence of at least one waste item (R) inside the detection area and to generate a first model that is uniquely representative of said waste item (R);
- control the optical sensor according to a second set of parameters to detect the presence of the at least one waste item (R) inside the detection area and to generate a second model that is uniquely representative of said waste item (R);
- compare the first and the second model by increasing a counter uniquely associated with said waste item in the event of the first model and the second model being identical;
- command the transmission device to transmit remotely an alert signal when the counter exceeds a set threshold value.

11. System according to claim 10, comprising:
- a chargeable battery configured to supply electric power at least to the optical sensor, to the control unit and to the transmission device;
- a charging device for charging said chargeable battery, said charging device preferably comprising at least one photovoltaic panel.

12. System according to claim 10 or 11, wherein the optical sensor comprises a camera with dynamic zoom or a time-of-flight sensor, TOF, or a LIDAR.

13. System according to claims 10-12, wherein the transmission device comprises an antenna configured to transmit the alert signal by a wireless communication protocol, preferably a Wi-Fi^{®}, Bluetooth^{®} or LoraWAN^{®} protocol.

14. Waste identification system comprising:
- a movable support;
- a system in accordance with any one of claims 10 to 13, said system being installed on the movable support.

15. System according to claim 14, wherein said movable support comprises one of: a drone, preferably a self-driven drone, or a vehicle, preferably a waste-collection vehicle.
